# EUROPEAN PATENT APPLICATION

(11) **EP 4 170 780 A1**
(43) Date of publication of application: **26.04.2023**
(21) Application number: 21870537.4
(22) Date of filing: 24.09.2021
(51) Int. Cl.: H01M 50/103

(54) **CELL, BATTERY, MANUFACTURING METHOD FOR CELL, AND ELECTRONIC DEVICE**

(30) Priority: 02.09.2021 CN 202111028075
(71) Applicant: Dongguan NVT Technology Limited, Donguan, Guangdong 523000 (CN)
(72) Inventor: ZHANG, Jing, Dongguan Guangdong 523000 (CN)
(74) Representative: Icosa
(86) International application number: PCT/CN2021/120428
(87) International publication number: WO 2023/029130

(57) **Abstract**

The present application discloses a cell, a battery, a manufacturing method of a cell, and an electronic device. The sealant comprises an exposed portion extending out of the top sealing, the exposed portion is provided with an avoidance area and/or a thinning area, and the avoidance area and/or the thinning area is provided for bending of the tab. The exposed portion of the sealant can bend along the avoidance area and/or the thinning area, so that the length of the sealant after bending in a length direction of the cell is reduced, which is conductive to reducing the packaging space of the cell and improving the capacity of the cell.

## Description

The present application claims the priority of a Chinese patent application with the Application No. 202111028075.7 and the title of "CELL, BATTERY, MANUFACTURING METHOD OF CELL, AND ELECTRONIC DEVICE", which is filed to CNIPA on September 2, 2021, and the entire contents of the above application are incorporated in the present application by reference.

### FIELD

The present application relates to the field of electrochemical technology, in particular to a cell, a battery, a manufacturing method of a cell, and an electronic device.

### BACKGROUND

With the vigorous development of electrochemical technology, people's requirements for the improvement of battery capacity are getting higher and higher. In order to improve battery capacity, manufacturers usually optimize a design of a head space of a battery, in which top sealing bending batteries are one of popular batteries currently. In the top sealing bending batteries, a top sealing of a battery is bent and fixed to one end face of the battery. Accordingly, a tab of the battery is also bent to facilitate electrical connection to the circuit board. However, a sealant is arranged between the tab and the top sealing, and in order to ensure a sealing effect of the top sealing at an extended position of the tab and avoid the tab contacting an exposed aluminum layer of the top sealing, the sealant will generally protrude a certain length from the top sealing. In addition, limited by the existing production process level, the length of the sealant protruding from the top sealing is often more than 1mm. Due to a high hardness of the sealant, it is not only difficult to be bent, but also occupies a large length in a length direction of the battery after bending, resulting in a waste of space in the length direction of the battery, which is not conducive to reducing a packaging space of the cell and improving the battery capacity.

### SUMMARY

Embodiments of the present application provide a cell, a battery, a manufacturing method of a cell, and an electronic device, which reduces a bending difficulty of sealant, and reduces a length of the sealant after bending occupied in the length direction of the battery.

In a first aspect, an embodiment of the present application provides a cell, comprising: a shell, an electrode assembly, a tab, and a sealant; the shell comprises a main body and a top sealing, the main body comprises a bottom surface, a side surface and a top surface, the side surface is connected with the bottom surface and the top surface, and the top sealing is connected to the top surface and is bent towards the top surface; the electrode assembly is housed in the main body; one end of the tab is electrically connected to the electrode assembly, and the other end of the tab extends out of the top sealing; the sealant is located between the tab and the top sealing; the sealant comprises an exposed portion extending out of the top sealing, the exposed portion is provided with a bending line, the bending line is on the sealant, and perpendicular to an extension direction of the tab. Optionally, along the extension direction of the tab, the bending line is arranged opposite to the top sealing. The bending line can reduce the bending difficulty of the sealant, so that the length of the exposed portion after bending in the length direction of the cell can be reduced, which is conducive to improving the capacity of the cell.

In some embodiments, a stress required for bending the sealant at the bending line is smaller than that required for bending the sealant at other positions, which facilitates the bending of the sealant.

In some embodiments, the exposed portion is provided with an avoidance area and/or a thinning area, and the avoidance area and/or the thinning area is provided for bending of the tab. Optionally, the avoidance area and/or the thinning area forms the bending line on the sealant.

In some embodiments, the exposed portion comprises a first part and a second part which are arranged oppositely along an extension direction of the tab, and the bending line is arranged between the first part and the second part. The second part can increase an area of the tab covered by the sealant, and reduces an exposed part of the tab, which is conducive to the protection of the tab.

In some embodiments, the avoidance area and/or the thinning area is continuously distributed, on the exposed portion, perpendicular to the extension direction of the tab. The avoidance area and/or the thinning area is continuously distributed between the first bending area and the second bending area, which can be regarded as the avoidance area and/or the thinning area passing through the bending area along a third direction (e.g., the third direction is perpendicular to the extension direction of the tab), and it is conducive to reducing preparation difficulty of the avoidance area and/or the thinning area.

In some embodiments, the avoidance areas and/or the thinning areas are distributed at intervals, on the exposed portion, perpendicular to the extension direction of the tab. The first part and the second part are still connected and are not disconnected, which is conducive to the structural strength of the exposed portion and the protection of the tab. In addition, after bending, the risk of electrical contact between the tab and the aluminum-plastic film at a cut opening on of the top sealing can be reduced, so as to reduce the safety risk caused by short circuit.

In some embodiments, the exposed portion comprises a first part and a second part which are arranged oppositely along an extension direction of the tab; along a direction perpendicular to extension direction of the tab, an length of the first part is less than that of the second part on at least one side of the tab, which can reduce the risk of puncturing the packaging tape by burrs or the like at the fracture (i.e. the edge of the bending line) of the exposed portion after bending. Optionally, along a direction perpendicular to the extension direction of the tab, on at least one side of the tab, a difference between the lengths of the second part and the first part is D₀, and 0.5mm<D₀≤3.0mm.

In some embodiments, a distance between the avoidance area and/or the thinning area and the top sealing is W₀, and 0.2mm<W₀≤1.0mm. Optionally, W₀=0.5mm, which facilitates bending of the sealant.

In some embodiments, along the extension direction of the tab, a height of the exposed portion is H₀, and 0.2mm<H₀≤3.0mm.

In some embodiments, along the extension direction of the tab, the length of the top sealing is H₂, and 1.0mm<H₂≤4.0mm.

In some embodiments, the bending line is arranged on a side of the exposed portion located at the tab. That is, on one side of the tab, the sealant is provided with a bending line, while on the other side of the tab, the sealant is not provided with bending line, which can reduce a bending difficulty of the sealant. In addition, when the bending line is provided on a side of the bending area facing away from the top sealing, after bending, the sealant facing the top sealing can reduce the risk of electrical contact between the tab and the aluminum-plastic film at a cut opening of the top sealing, so as to reduce the safety risk caused by short circuit.

In a second aspect, an embodiment of the present application provides a manufacturing method of a cell, used to manufacture any one of the above-mentioned cells, wherein the method comprises: placing the cell packing with a sealant on a positioning device for positioning, wherein the sealant is located between the tab and the top sealing of the cell; and using a laser to cut the sealant along a width direction of the tab to form a bending line on the sealant, wherein the bending line comprises an avoidance area and/or a thinning area, and the avoidance area and/or the thinning area is provided for bending of the tab.

In some embodiments, the sealant is cut with a continuous laser having a first energy to form avoidance areas being continuously distributed on the sealant.

In some embodiments, the sealant is cut with an intermittent laser having a first energy to form avoidance areas being distributed at intervals on the sealant.

In some embodiments, the sealant is cut with a laser having a second energy to form thinning areas on the sealant, and the second energy is less than the first energy.

In some embodiments, the laser is a carbon dioxide laser, a pulse width of the laser is 10ns to 500ns, a frequency is 500 KHz to 2000 KHz, and a moving rate of the laser is 20mm/s to 50mm/s.

In a third aspect, an embodiment of the present application provides a battery, comprising: a shell, an electrode assembly, a tab, a sealant, and a circuit board. The shell comprises a main body and a top sealing, the main body comprises a bottom surface, a side surface and a top surface, the side surface is connected with the bottom surface and the top surface, and the top sealing is connected to the top surface and is bent towards the top surface; the electrode assembly is housed in the main body; one end of the tab is electrically connected to the electrode assembly, and the other end of the tab extends out of the top sealing; the circuit board is arranged on a side of the top sealing facing away from the electrode assembly and electrically connected with the tab of the cell; the sealant is located between the tab and the top sealing and comprises an exposed portion extending out of the top sealing, the exposed portion is provided with a bending area, and the tab is arranged to bend in the bending area. The exposed portion of the sealant can be bent with the bending of the tab, and the length of the sealant after bending in the length direction of the cell can be reduced, which is conducive to improving the capacity of the cell.

In some embodiments, the exposed portion comprises a first sub part and a second sub part, the first sub part is connected with the top sealing and extends along a first direction, the second sub part is connected with the circuit board and extends along an opposite direction of the first direction, and the bending area connects the first sub part and the second sub part.

In some embodiments, a stress required for bending the sealant at the bending area is smaller than that required for bending the sealant at other positions.

In some embodiments, the bending area is provided with an avoidance areas and/or a thinning area.

In some embodiments, the bending area comprises a first bending area and a second bending area which are arranged oppositely along a second direction, and the bending line is arranged between the first bending area and the second bending area.

In some embodiments, avoidance areas and/or thinning areas are distributed continuously on the bending area along a third direction, and the third direction is perpendicular to the first direction and the second direction. The avoidance areas and/or the thinning areas are distributed continuously between the first bending area and the second bending area, which can be regarded as the avoidance areas and/or the thinning areas passing through the bending area along a third direction, which is conducive to reducing preparation difficulty of the avoidance area and/or the thinning area.

In some embodiments, the avoidance areas and/or the thinning areas are distributed at intervals on the bending area along a third direction, and the third direction is perpendicular to the first direction and the second direction. The first bending area and the second bending area are still connected and are not disconnected, which is conducive to improve the structural strength of the bending area, protect the tab, and reduce the risk of puncturing the packaging tape by burrs or the like at the fracture (i.e. the edge of the bending line) of the first bending area and the second bending area. The packaging tape is used to package and protect the head structure of the cell so as to, for example, electrically insulate the head structure from the outside, or the like.

In some embodiments, the bending area comprises a first bending area and a second bending area which are arranged oppositely along a second direction. Along a third direction, an length of the first bending area is less than that of the second bending area on at least one side of the tab. The third direction is perpendicular to the first direction and the second direction. The risk of puncturing the packaging tape by burrs or the like at the fracture (i.e. the edge of the bending line) of the first bending area can be reduced. Optionally, along the third direction, on either side of the tab, a difference between the lengths of the second bending area and the first bending area is D₀, and 0.5mm<D₀≤3.0mm.

In some embodiments, a bending angle of the bending area is α₀, and 60°≤α₀ ≤120°.

In some embodiments, a radius of curvature of the first bending area is R₁, a radius of curvature of the second bending area is R₂, and 0.1mm≤R₁≤0.5mm, 0.1mm≤R₂≤0.5mm.

In some embodiments, an adhesive part is arranged between the top sealing and the circuit board, the adhesive part is configured to insulate and fix the circuit board on the top sealing, which can reduce the risk of electrical contact between the circuit board and the aluminum-plastic film (e.g., the aluminum-plastic film exposed at the fracture) of the top sealing, and reduce the length in the length direction of the battery. Optionally, the adhesive part comprises at least one of double-sided adhesive, foam, hot-melt adhesive and silica gel.

In a fourth aspect, an embodiment of the present application provides a cell, comprising: a shell, an electrode assembly, a tab, and a sealant. The shell comprises a main body and a top sealing, the main body comprises a bottom surface, a side surface and a top surface, the side surface is connected with the bottom surface and the top surface, and the top sealing is connected to the top surface and is bent towards the top surface. The electrode assembly is housed in the main body. One end of the tab is electrically connected to the electrode assembly, and the other end of the tab extends out of the top sealing. The sealant is located between the tab and the top sealing. the shell further comprises a side sealing, the side sealing is connected to the side surface and bent towards the side surface, the top sealing is connected with the side sealing, an end of the side sealing away from the top surface has a first side, an end of the top sealing away from the top surface has a second side, an included angle between the first side and the second side is α, and 5°≤α≤60°, and an included angle between the second side and the top surface is α', and 60°≤α'≤120°. By bending the top sealing and controlling thresholds of the included angles α and α', not only can the risk of damage of the top sealing and the side sealing at the bending part be reduced, but also the length of the cell can be reduced, thereby meeting the size requirements of external electrical device and expanding an application range.

In some embodiments, an opening length of the included angle between the first side and the second side is L₀, and 1.0mm≤L₀≤8.0mm. Optionally, 1.0mm≤L₀ ≤3.5mm. While reducing the length of the cell in the second direction, the risk of damage of the top sealing and the side sealing at the bending part is reduced.

In some embodiments, a height of the first side protruding from the top surface is H₁, and 1.0mm<H₁≤4.0mm. Optionally, 1.0mm<H₁≤3.7mm, or, 1.5mm <H₁≤2.5mm. While reducing the risk of damage of the top sealing and the side sealing at the bending part, the length of the cell is reduced.

In some embodiments, a thickness of the aluminum-plastic film of the top sealing and the side sealing is 67µm to 150µm, preferably, 86µm to 115µm, which is conductive to the bending of the top sealing and the side sealing.

In some embodiments, the cell further comprises a thermistor, and the thermistor can be arranged in the included angle of the first side and the second side. The thermistor is configured to prevent the cell from working at a too high temperature.

In some embodiments, the included angle of the first side and the second side is filled with a filler, and the filler is used to fix the folding angle of the first side and the second side. Optionally, the filler is glue.

A fifth aspect, an embodiment of the present application provides a battery, comprising a circuit board and any one of the above-mentioned cells, wherein the circuit board and the tab of the cell are electrically connected.

In some embodiments, the shell comprises two side sealings which are arranged oppositely, the circuit board is arranged between the two side sealings, and on the top sealing, and both ends of the circuit board are arranged opposite to the corresponding side sealings. It can not only reduce the extrusion of both ends of the circuit board to the side sealing, but also reduce the risk of damage to the side sealing due to collision.

In some embodiments, a distance between either end of the circuit board and the corresponding side sealing is W₁, and 2.0mm<W₁≤8.0mm.

In some embodiments, an adhesive part is arranged between the top sealing and the circuit board, the adhesive part is configured to insulate and fix the circuit board on the top sealing, which can reduce the risk of electrical contact between the circuit board and the aluminum-plastic film (e.g., the aluminum-plastic film exposed at the fracture) of the top sealing, and reduce the length in the length direction of the battery. Optionally, the adhesive part comprises at least one of double-sided adhesive, foam, hot-melt adhesive and silica gel.

A sixth aspect, an embodiment of the present application provides a manufacturing method of a cell, used to manufacture any one of the above-mentioned cells, wherein the method comprises: placing the cell in a positioning fixture for positioning, wherein the cell comprises a main body, a top sealing and a side sealing, the main body comprises a bottom surface, a side surface and a top surface, the side surface is connected with the bottom surface and the top surface, the top sealing is connected to the top surface, the side sealing is connected to the side surface, the top sealing is connected to the side sealing, an end of the side sealing away from the top surface has a first side, and an end of the top sealing away from the top surface has a second side; bending the side sealing towards the side surface; and bending the top sealing towards the top surface, and an included angle between the first side and the second side is α, and 5°≤α≤60°, an included angle between the second side and the top surface is α', and 60°≤α'≤120°.

A seventh aspect, an embodiment of the present application provides an electronic device, comprising a load and any one of the above-mentioned cells or batteries, wherein the cell or battery is configured to supply power to the load.

As mentioned above, according to the cell, the battery, the manufacturing method of the cell, and the electronic device provided by embodiments of the present application, the exposed portion of the sealant is provided with a bending line, and the exposed portion can be bent along the bending line, and the length in the length direction of the cell after being bent can be reduced, which is conducive to reducing the packaging space of the cell and improving the capacity of the cell.

### BRIEF DESCRIPTION OF THE DRAWINGS

Fig. 1 is a three-dimensional schematic diagram of a structure of a cell provided by an embodiment of the present application.
Fig. 2 is a front view of a cell according to First Embodiment of the present application.
Fig. 3 is a schematic diagram of electrically connection of the cell shown in Fig. 2 with a circuit board and bending sealant.
Fig. 4 is an enlarged view of a structure of Area I of a battery shown in Fig. 3.
Fig. 5 is a front view of a cell according to Second Embodiment of the present application.
Fig. 6 is an enlarged view of a structure of Area II of the cell shown in Fig. 5.
Fig. 7 is a schematic diagram of a structure of a cell of the present application when the sealant is not cut by laser.
Fig. 8 is a schematic diagram of electrically connection of the cell shown in Fig. 5 with a circuit board and bending sealant.
Fig. 9 is an enlarged view of a structure of Area III of the battery shown in Fig. 8.
Fig. 10 is a diagram of a structure of the battery shown in Fig. 8 when viewed along a first direction.
Fig. 11 is a schematic diagram of a scene where the sealant is cut by laser according to an embodiment of the present application.
Fig. 12 is a flowchart of a manufacturing method of a cell according to an embodiment of the present application.
Fig. 13 is an enlarged view of a structure of Area A of the cell shown in Fig. 1.
Fig. 14 is an enlarged view of a structure of Area B of the cell shown in Fig. 1.
Fig. 15 is a flowchart of a manufacturing method of a cell according to another embodiment of the present application.
Fig. 16 is an enlarged view of a structure of Area III of the battery shown in Fig. 8.
Fig. 17 is a schematic diagram of a structure of a cell according to Fourth Embodiment of the present application.
Fig. 18 is an enlarged view of a structure of Area IV of the battery shown in Fig. 17.
Fig. 19 is a diagram of a structure of a cell according to Fifth Embodiment of the present application.
Fig. 20 is an enlarged view of a structure of Area V of the battery shown in Fig. 19.
Fig. 21 is a schematic diagram of a structure of a cell according to Sixth Embodiment of the present application when viewed along an opposite direction of the first direction.
Fig. 22 is an enlarged view of a structure of Area VI of the cell shown in Fig. 21.
Fig. 23 is a schematic diagram of a structure of a cell according to Sixth Embodiment of the present application when viewed along the first direction.
Fig. 24 is an enlarged view of a structure of Area VII of the battery shown in Fig. 23.
Fig. 25 is a schematic diagram of electrically connection of the cell shown in Fig. 22 with a circuit board and bending sealant.
Fig. 26 is an enlarged view of a structure of Area VIII of the battery shown in Fig. 23.

### DESCRIPTION OF THE PREFERRED EMBODIMENTS

In a cell and a battery provided by an embodiment of the present application, in a state when a tab is bent towards a circuit board, an exposed portion of sealant is provided with a bending area, and the tab is arranged to bend in the bending area, that is, the exposed portion of the sealant can be bent with the bending of the tab. After bending, the exposed portion of the sealant can not only protect the bending area of the tab and a part of the tab extending towards the circuit board, but also reduce the length of the cell, which is conducive to reducing the packaging space required by the cell and improving the capacity of the cell.

In order to make the purpose, technical solution and advantages of the present application clearer, the technical solution of the present application will be clearly described hereinafter in combination with specific embodiments and corresponding drawings. It goes without saying that the embodiments described hereinafter are only a part of the embodiments of the present application, not all of the embodiments. Without conflict, the following embodiments and their technical features can be combined with each other, and also belong to the technical solution of the present application.

### First embodiment

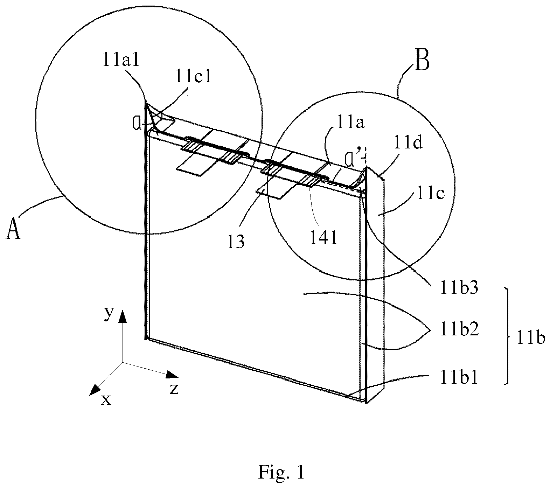

Referring to Figs. 1 to 4 together, a cell 10 of this embodiment comprises a shell 11, an electrode assembly (not shown), a tab 13, and a sealant 14.

The shell 11 is surrounded to form a shape of the cell 10 and can also be configured to define an appearance of the cell 10. For example, the shell 11 comprises a top sealing 11a, a main body 11b and a side sealing 11c. The electrode assembly is arranged in the main body 11b. The top sealing 11a and the tab 13 extend from a first end face of the main body 11b. The first end face of the main body 11b can be regarded as a first end face 10a of the cell 10, which will be described hereinafter as an example. The main body 11b is formed with a housing cavity, internal components of the cell 10 (such as electrode assembly and electrolyte) are built in the housing cavity, and the shell 11 is configured to protect the internal components, so as to improve the protection effect and safety.

The main body 11b comprises a bottom surface 11b1, a side surface 11b2 and a top surface 11b3. The bottom surface 11b1 and the top surface 11b3 are arranged opposite to each other. The side surface 11b2 is connected with the bottom surface 11b1 and the top surface 11b3. The top sealing 11a and the side sealing 11c are formed by packaging the shell 11 after the electrode assembly is housed in the main body 11b. The top sealing 11a is connected with the top surface 11b3, and the side sealing 11c is connected with the side surface 11b2.

On the first end face 10a of the top surface 11b3 of the main body 11b, the top sealing 11a is configured to realize sealing of the shell 11, so as to avoid the leakage of electrolyte from the first end face 10a, and the entry of impurities such as water and oxygen outside the shell 11 into the shell 11 from the first end face 10a. The top sealing 11a also seals an extending area of the tab 13 for sealing a joint between the shell 11 and the tab 13.

The side sealing 11c is bent towards the side surface 11b2, and the top sealing 11a is bent towards the top surface 11b3. By bending the side sealing 11c and the top sealing 11a, the width and length of the cell 10 are reduced, so as to meet size requirements of external electrical device and expand an application range. In addition, since the side sealing 11c and the top sealing 11a are relatively weak components in the cell 10, by bending the side sealing 11c and the top sealing 11a towards the main body 11b of the shell 11, the side sealing 11c and the top sealing 11a are not easy to be damaged due to collision and other reasons, so that a service life of the electric core 10 provided in the embodiment of the present application is long.

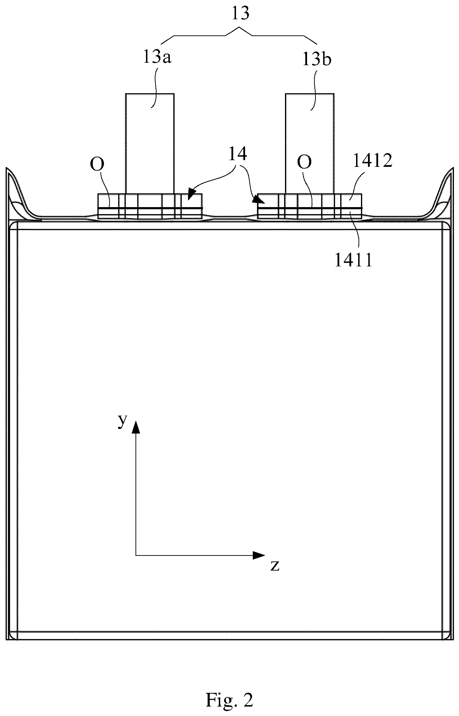

The top sealing 11a is a structure protruding from the main portion 11b of the cell 10. As shown in Fig. 1, the top sealing 11a does not extend along a second direction y, but bends towards the first end face 10a and is fixed to the first end face 10a, so as to reduce an overall length of the cell 10. The second direction y is the length direction of the cell 10. It should be understood that in the cell 10, referring to Fig. 2, the top sealing 11a can also extend along the second direction y without being bent, and at this time, the tab is not bent, either, and an extension direction of the tab 13 is the second direction y. In the embodiment of the present application, a thickness direction of the cell 10 can be a first direction x, a width direction of the tab 13 can be a third direction z, and two of the first direction x, the second direction y and the third direction z are perpendicular. It should be noted that due to the error in actual processing or measurement, the so-called perpendicularity in the description of the present application does not require that an included angle between the two must be 90°, instead, a deviation of ±10° is allowed, that is, the so-called perpendicularity can be understood as the included angle between any two directions is 80° to 100°.

The top sealing 11a is bent towards the first end face 10a and fixed to the first end face 10a, comprising any of the following three scenes: in a first scene, the top sealing 11a is in contact with at least a part of the first end face 10a, for example, a part of a side face of the top sealing 11a close to the first end face 10a is in contact with the first end face 10a, or, the entire side face of the top sealing 11a close to the first end face 10a is in contact with the first end face 10a; in a second scene, along the second direction y, the top sealing 11a and the first end face 10a are arranged opposite to each other, and there is no contact between the two and there is a predetermined distance., and the predetermined distance can be determined according to the actual scene requirements, for example, it can be greater than 0 and less than or equal to 1mm; in a third scene, an adhesive part, such as double-sided adhesive, foam, hot-melt adhesive, silica gel, viscous heat dissipation materials with viscosity, etc., preferably hot-melt adhesive, is arranged between the top sealing 11a and the first end face 10a of the top surface 11b3. The adhesive part can completely or partially cover the first end face 10a, and/or, the adhesive part can be arranged on the first end face 10a in a straight line or wave shape (the embodiments of the present application do not limit the shape of the adhesive part), and the top sealing 11a is bonded to the first end face 10a of the top surface 11b3.

In a scene where the cell 10 has positive and negative polarities, the electrode assembly comprises a positive electrode and a negative electrode, and a separator arranged between the positive electrode and the negative electrode. The electrode assembly may be formed by winding or laminating a plurality of electrodes, one end of the tab 13 is electrically connected to the electrode assembly, for example, extends into the shell 11 and is electrically connected with the electrode of the corresponding polarity, and the other end of the tab 13 extends out of the top sealing 11a.

The tab 13 comprises a first tab 13a and a second tab 13b. The first tab 13a is a negative tab, and correspondingly, the second tab portion 13b is a positive tab. The first tab 13a is electrically connected with the negative electrode, and the second tab 13b is electrically connected with the positive electrode, and extends to the outside of the shell 11 respectively. In other embodiments, the first tab 13a may be a positive tab and the second tab 13b may be a negative tab. The structures of the first tab 13a and the second tab 13b can be the same or different, and both can be arranged symmetrically or asymmetrically along the third direction z. In some parts of this description, the structure of the tab 13 of the embodiment of the present application is described by taking one of them as an example.

It should be understood that the structure and shape of the tab 13 are not limited by the embodiments of the present application. For example, the tabs 13 can have a rectangular strip structure, and their respective sizes can be set adaptively according to actual needs. The materials comprise but are not limited to aluminum, nickel, copper, nickel-plated copper and other alloys. For example, the material of the positive tab 13 can be aluminum or nickel-plated aluminum, and the material of the negative tab 13 can be nickel-plated copper, which is not only conducive to improving the electrical connection performance with the negative electrode, but also improving the structural strength of the negative tab.

The sealant 14 is located between the tab 13 and the top sealing 11a. The sealant 14 is bonded with the tab 13 and also bonded with the shell 11 (such as an aluminum-plastic film of a soft shell), so as to improve a sealing effect of the shell 11 at the tab 13. The sealant 14 can be arranged on a first surface and a second surface of the tab 13 respectively, and the first surface and the second surface are arranged oppositely along the thickness direction of the tab 13.

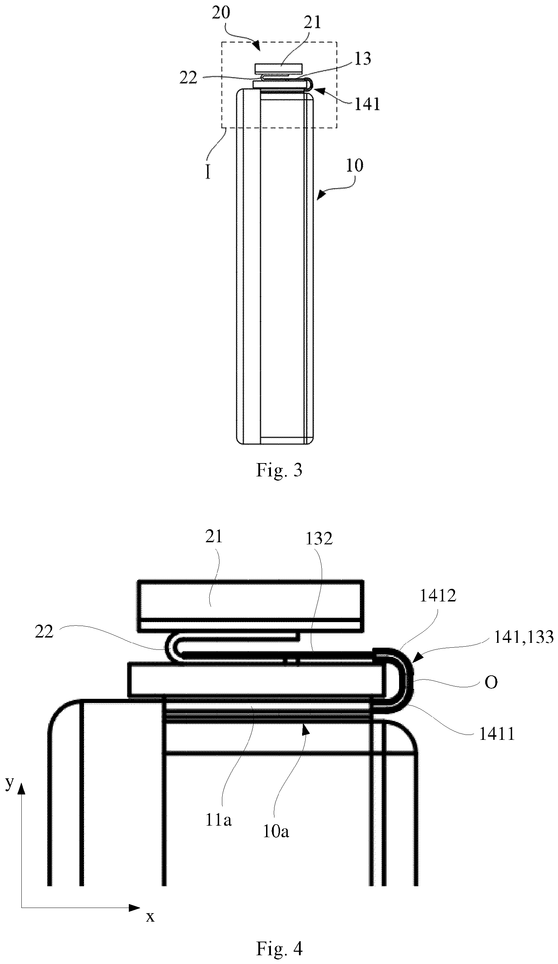

Figs. 1 and 2 are schematic diagrams of structures of the sealant 14 in a non-bending state. Figs. 3 and 4 are schematic diagrams of structures of the sealant 14 in a bending state.

Referring to Figs. 1 and 2, as for the sealant 14 in the non-bending state, the sealant 14 comprises an exposed portion 141 extending out of the top sealing 11a. The exposed portion 141 comprises a bending line O, and a first part 1411 and a second part 1412 arranged along an extension direction (i.e. the second direction y) of the tab 13. The bending line O is arranged between the first part 1411 and the second part 1412, that is, the bending line O divides the exposed portion 141 into the connected first part 1411 and second part 1412. The bending line O is on the sealant 14, and perpendicular to the extension direction y of the tab 13. The sealant 14 can be bent along the bending line O.

Referring to Figs. 3 and 4 together, in a scene of connecting the cell 10 of this embodiment and the circuit board 21 to form the battery 20, the exposed portion 141 of the sealant 14 is bent along the bending line O. When the sealant 14 is in a bending state, the circuit board 21 can be arranged adjacent to the top sealing 11a, correspondingly, the bent tab 13 extends to a side of the circuit board 21 facing away from the top sealing 11a (i.e. above as shown in Figs. 3 and 4). The circuit board 21 can be electrically connected with the tab 13 through a conductive member 22. In this scene, the first part 1411 and the second part 1412 are arranged to connect along the second direction y. The bending line O can reduce a bending difficulty of the sealant 14, so that the length of the sealant 14 in the second direction y after bending can be reduced, which is conducive to reducing the packaging space required by the cell 10 and improving the capacity of the cell 10.

In this embodiment, the bending line O may be a design that does not destroy the structure of the sealant 14, for example, it is only a line marked or not marked on the sealant 14.

For a scene where the bending line O is a line not marked on the sealant 14, continuing to refer to Figs. 3 and 4, a possible situation is that: a position where the sealant 14 is to be bent is not fixed, the exposed portion 141 of the sealant 14 is bent with the bending of the tab 13, and after bending, the exposed portion 141 is also arranged on a part of the tab 13 extending towards the circuit board 21. In some embodiments, the tab 13 is bent towards the circuit board 21, and the exposed portion 141 of the sealant 14 is at least arranged at a tab bending area 133 of the tab 13 bent towards the circuit board 21. The exposed portion 141 is at least arranged at the tab bending area 133 and a second tab portion 132 of the tab 13. The bent tab 13 comprises a first tab portion (not shown), the second tab portion 132 and the tab bending area 133. The tab bending area 133 is connected to the first tab portion and the second tab portion 132. The first tab portion is electrically connected with the electrode assembly and extends towards the tab bending area 133. The second tab portion 132 extends towards the circuit board 21 and is electrically connected with the circuit board 21. The extension directions of the first tab portion and the second tab portion 132 are different, for example, as shown in Fig. 4, the first tab portion extends along the third direction z, and the second tab portion 132 extends along an opposite direction of the third direction z, and the tab bending area 133 has an arc structure. It goes without saying that, in other embodiments, the extension directions of the first tab portion and the second tab portion 132 may not be opposite, but have an angle that meets the design requirements, as long as the tab bending area 133 has an arc structure. It should be noted that the tab bending area 133 may not have two arc top angles as shown in Fig. 4, but may also have an arc structure with other shapes, such as a structure with a single arc top angle.

In the embodiment of the present application, the bent sealant 14 is arranged not only in the bending area (i.e. the tab bending area 133) of the tab 13, but also in a part (i.e. the second tab portion 132) of the tab 13 extending towards the circuit board 21. The exposed portion 141 of the sealant 14 can not only protect the tab bending area 133 and the second tab portion 132 of the tab 13, but also reduce a length of the sealant 14 in the second direction y after bending, which is conducive to reducing the packaging space required by the cell 10 and improving the capacity of the cell 10. It goes without saying that the sealant 14 can also be arranged in a part (i.e. the first tab portion)where the tab 13 is connected with the electrode assembly.

In the first direction x, as shown in Figs. 3 and 4, the circuit board 21 may not exceed a thickness range of the main body 11b, which is conducive to reducing the overall thickness of the cell 10. In other embodiments, an end of the circuit board 21 (e.g., an end of the circuit board 21 facing away from the exposed portion 141) may be beyond the main body 11b. When the cell 10 is matched with the electrical device (e.g., battery compartment), the end of the circuit board 21 beyond the main body part 11b may be combined with the space of the electrical device, so as to achieve assembly stability.

In some embodiments, an adhesive part (not shown) can be arranged between the top sealing 11a and the circuit board 21. The adhesive part is configured to insulate and fix the circuit board 21 on the top sealing 11a, for example, fix on a side face of the top sealing 11a facing away from the cell 10, which can reduce the risk of electrical contact between the circuit board 21 and the aluminum-plastic film (such as the aluminum-plastic film exposed at a fracture) of the top sealing 11a, and can reduce the length of the battery 10 in the second direction y. Alternatively, the adhesive part comprises at least one of double-sided adhesive, foam, hot-melt adhesive and silica gel, or other insulating and heat dissipation materials with viscosity. The adhesive part can completely or partially cover the top sealing 11a (and/or an overlapping area between the top sealing 11a and the circuit board 21), and/or the adhesive part can be arranged in a straight line or wave shape. The embodiment of the present application does not limit the shape of the adhesive part.

### Second Embodiment

Each embodiment of the present application uses the same reference numerals to identify structural elements with the same name. Based on the description of the above embodiment, it is different therefrom that the bending line O of this embodiment is specifically implemented as an avoidance area 141d, that is, the bending line O is a design that destroys the structure of the sealant 14.

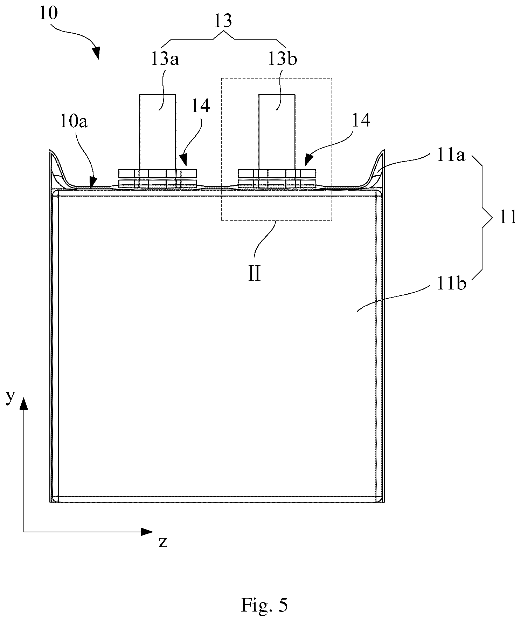

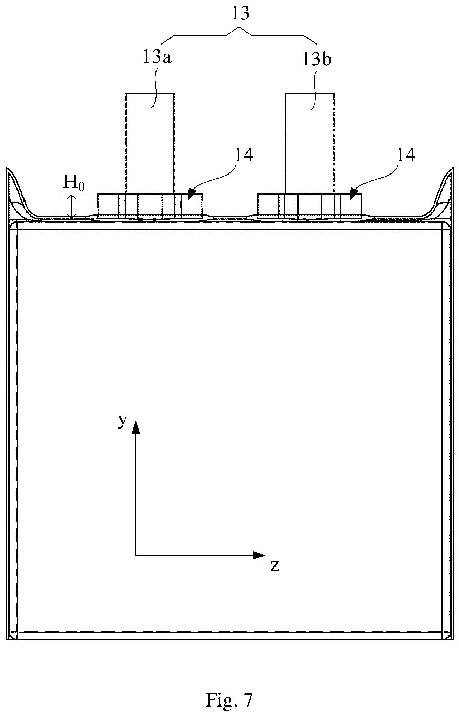

As shown in Figs. 5 to 7, as for the non-bending sealant 14, the sealant 14 comprises the exposed portion 141 extending out of the top sealing 11a. The exposed portion 141 comprises a first part 1411 and a second portion 1412 which are arranged opposite to each other along the extension direction of the tab 13 (i.e. the second direction y). The avoidance area 141d is arranged between the first part 1411 and the second part 1412. The avoidance area 141d forms the bending line O perpendicular to the extension direction y of the tab 13 on the sealant 14. At the bending line O, the thickness of the sealant 14 is zero.

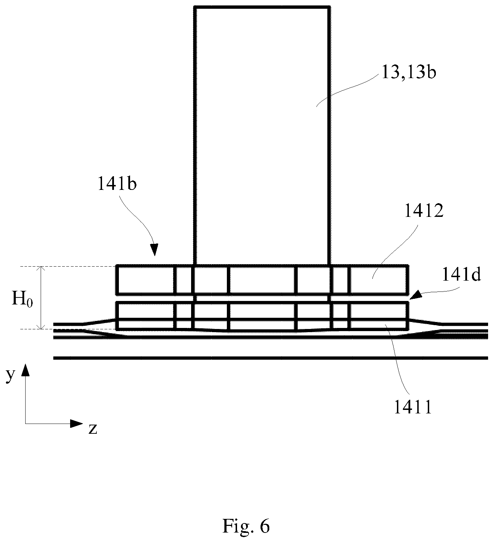

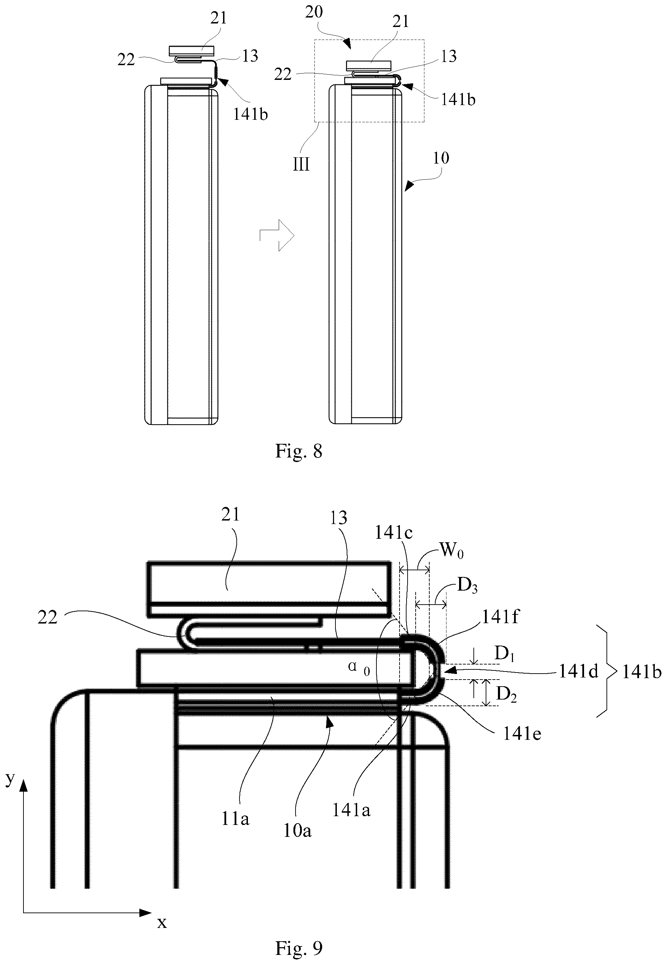

As shown in Figs. 8 and 9, as for the sealant 14 in the bending state, the exposed portion 141 of the sealant 14 comprises a first sub part 141a, a bending area 141b and a second sub part 141c. The first sub part 141a is connected with the top sealing 11a and extends along the first direction x. The second sub part 141c is arranged opposite to the first sub part 141a along the second direction y, and the second sub part 141c is connected with the circuit board 21 and extends along the opposite direction of the first direction x. The bending area 141b is connected between the first sub part 141a and the second sub part 141c, and the bending area 141b is provided with an avoidance area 141d. Thereinto, after the cell 10 changes from a state of Figs. 5 and 6 to a state of Figs. 8 and 9, the first part 1411 is deformed into the first sub part 141a, the first sub part 141a is arranged at the first tab portion, the second part 1412 is deformed into the bending area 141b and the second sub part 141c, the second sub part 141c is arranged at the second tab portion 132, and the bending area 141b is arranged at the tab bending area 133.

The avoidance area 141d can reduce a bending difficulty of the sealant 14. After bending, the length of the tab 13 and the sealant 14 in the length direction (i.e. the second direction y) of the cell 10 can be reduced, which is conducive to reducing the packaging space required by the cell 10 and improving the capacity of the cell 10.

In some embodiments, after the sealant 14 is bent, as shown in Fig. 9, the distance between the avoidance area 141d and the top sealing 11a is W₀, and 0.2mm<W₀≤1.0mm. Reducing W₀ is conducive to the bending of the tab13 and the sealant 14. Alternatively, if W₀=0.5mm, it is not only conducive to the bending of the tab 13 and the sealant 14, but also reduces the thickness of the cell 10 (i.e. the length in the first direction x).

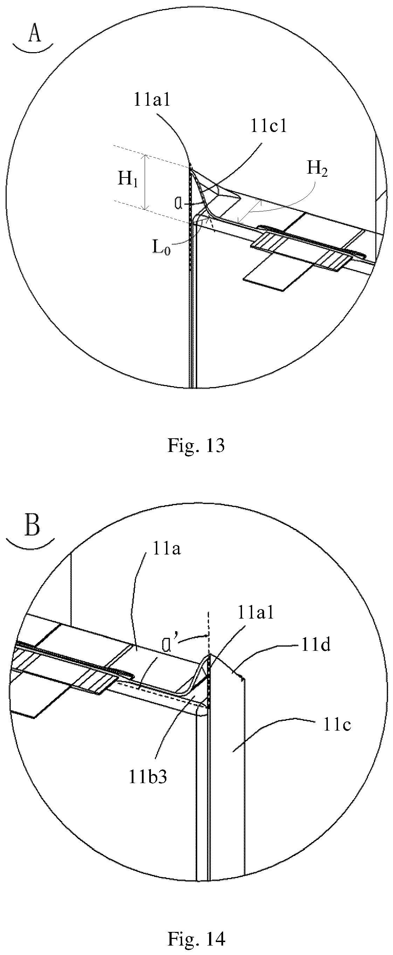

In addition, referring to Figs. 1 and 13, the width of the top sealing 11a (i.e. the length of the top sealing 11a along the extension direction of the tab 13) is H₂, and 1.0mm<H₂≤4.0mm. Reducing H₂ is not only conducive to reducing the thickness of the cell 10, but also conducive to setting a longer exposed portion 141 in the thickness direction of the cell 10, so that it is conducive to the bending of the tab 13 and the sealant 14.

The length of the bending area 141b in the second direction y can be understood as the length of an orthographic projection of the bending area 141b in the second direction y when viewed along the first direction x. Along the second direction y, the length of the sealant 14 in the non-bending state is greater than that in the bending state. Accordingly, as shown in Figs. 5 to 7, the bending area 141b extends along the second direction y before bending, and both the first sub part 141a and the second sub part 141c extend along the second direction y and are arranged opposite to each other before bending. After bending, the first sub part 141a extends along the first direction x, and the second sub part 141c extends along the opposite direction of the first direction x. The length of the avoidance area 141d in the second direction y in the non-bending state is greater than that in the bending state.

Referring to Figs. 8 and 9 together, the bending area 141b comprises a first bending area 141e and a second bending area 141f which are arranged opposite to each other along the second direction y, and the avoidance area 141d is arranged between the first bending area 141e and the second bending area 141f. In this embodiment, when the cell 10 is in the non-bending state, the avoidance area 141d is continuously distributed, on the exposed portion 141, perpendicular to the extension direction of the tab 13. When the cell 10 is in the bending state, the avoidance area 141d is continuously distributed on the bending area 141b along the third direction z, which can be regarded as the avoidance area 141d passing through the bending area 141b along the third direction z.

In some embodiments, after the sealant 14 is bent, as shown in Fig. 9, a bending angle of the exposed portion 141 at the bending of the tab 13 is α₀, and 60°≤ α₀≤120°, which is conducive to the bending part of the tab 13 and the sealant 14. This bending angle α₀ can be understood as an included angle of the bending area 141b after bending. Taking the bending area 141b comprising the arc-shaped first bending area 141e and the arc-shaped second bending area 141f which are arranged opposite to each other along the second direction y as an example, it is an included angle between a tangent of the first bending area 141e and a tangent of the second bending area 141f.

As shown in Figs. 8 and 9, both the first bending area 141e and the second bending area 141f are arc-shaped structures. The radius of curvature of the first bending area 141e is R₁, and the radius of curvature of the second bending area 141f is R₂. The radius R₁ of curvature can be understood as a length equal to the distances to one end of the first bending area 141e, to the other end of the first bending area 141e, and to a middle point of one end and the other end on the first bending area 141e, and the radius R₂ of curvature can be understood as a length equal to the distances to one end of the second bending area 141f, to the other end of the second bending area 141f, and to a middle point of one end and the other end on the second bending area 141f. In some scenarios, 0.1mm≤R₁≤0.5mm, 0.1mm≤R₂≤0.5mm. By reducing the radiuses of curvature of the first bending area 141e and the second bending area 141f, the curvatures of the first bending area 141e and the second bending area 141f are reduced, and the length of the bending area 141b in the second direction y after bending is reduced, which is conducive to reducing the packaging space required by the cell 10 and improving the capacity of the cell 10.

In other scenes, along the second direction y, as shown in Figs. 5 to 7, the height of the exposed portion 141 is H₀, and 0.2mm<H₀≤3.0mm. By reducing H₀, it is conducive to reducing the height of the sealant 14 after bending, so as to reduce the height of the cell 10 (along the second direction y), thereby reducing the packaging space required for the cell 10 (such as the height of the battery compartment containing the cell 10).

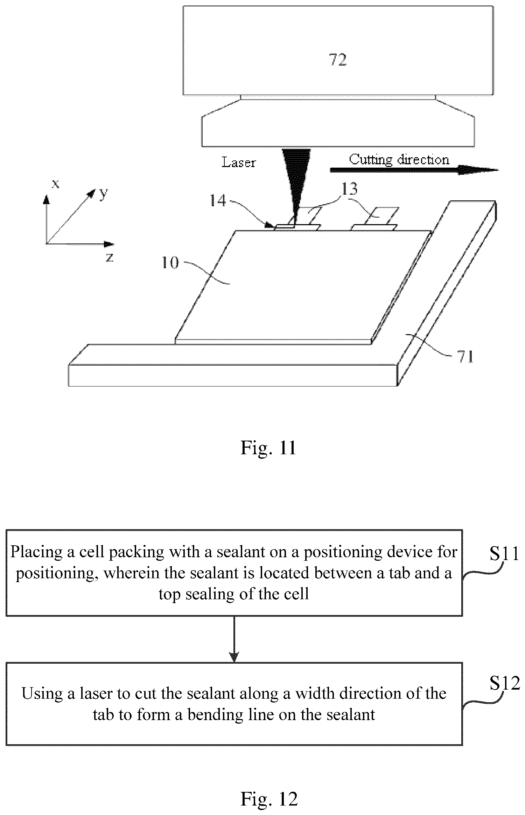

In some scenarios, as shown in Fig. 11, the avoidance area 141d can be made by a laser cutting process. Referring to Figs. 11 and 12, the manufacturing method of the cell comprises the following steps S11 and S12.

S11: placing a cell packing with sealant on a positioning device for positioning, wherein the sealant is located between a tab and a top sealing of the cell.

S12: using a laser to cut the sealant along a width direction of the tab to form a bending line on the sealant.

The cell 10 with the non-bending tab 13 and sealant 14 is placed in a predetermined area and positioned by a positioning device 71, and a laser generation device 72 can generate a carbon dioxide laser. The laser pulse width is 10ns to 500ns, the frequency is 500 KHz to 2000 KHz, and the laser moving rate is 20mm/s to 50mm/s. The laser generation device 72 cuts one side of the sealant 14 (i.e. the sealant 14 located on one side face of the tab 13) along the third direction z, then turns the cell 10 and cuts the other side of the sealant 14 (i.e. the sealant 14 located on the other side face of the tab 13), so as to prepare the avoidance area 141d. In the laser cutting process, the sealant 14 is cut with a continuous laser having a first energy to form a continuously distributed avoidance area 141d on the sealant 14. The continuously distributed avoidance area 141d is conducive to reducing the preparation difficulty.

In some embodiments, along the second direction y, the length of the avoidance area 141d before bending may be greater than that after bending. As shown in Fig. 9, the length of the avoidance area 141d after bending is D₁, and 0<D_{1≤} 0.4mm. By reducing the length of the avoidance area 141d in the second direction y, the distance D₁ between the first bending area 141e and the second bending area 141f is reduced, which can reduce the risk of puncturing a packaging tape by burrs or the like at the edge of the avoidance area 141d (i.e. the cut edge of the first bending area 141e and the second bending area 141f) . The packaging tape is used to package and protect a head structure of the cell 10, so as to isolate (comprising electrical insulation) the head structure (such as the top sealing 11a and the circuit board 21) from the outside, etc.

In some embodiments, as shown in Figs. 8 and 9, along the second direction y, the length of the first bending area 141e after bending is D₂, and 0.2mm≤D₂≤ 1.0mm. By reducing D₂, the risk of puncturing the packaging tape by burrs or the like at the fracture (i.e. the cut edge) of the first bending area 141e can be reduced. The length of the first bending area 141e after bending can be understood as the length of an orthographic projection of the first bending area 141e in the second direction y when viewed along the first direction x.

In some embodiments, as shown in Fig. 9, the length of the bending area 141b in the first direction x is D₃, and 0.1mm≤D₃≤0.5mm. By reducing D₃, the length of the bending area 141b in the thickness direction of the cell 10 (i.e. the first direction x) is reduced, which is conducive to reducing the overall thickness of the cell 10. The length of the bending area 141b in the first direction x can be understood as the length of an orthographic projection of the bending area 141b (comprising the first bending area 141e and the second bending area 141f) in the first direction x when viewed along the second direction y.

Referring to Fig. 1, Figs. 13 to 15 together, the top sealing 11a is bent towards the top surface 11b3, and an intersection of the top sealing 11a and the side sealing 11c forms a folding angle 11d. The preparation process of folding angle 11d is not limited by the embodiment of the present application, for example, comprising the following steps S21 to S23.

S21: placing a cell in a positioning fixture for positioning, wherein the cell comprises a main body, a top sealing and a side sealing, the main body comprises a bottom surface, a side surface and a top surface, the side surface is connected with the bottom surface and the top surface, the top sealing is connected to the top surface, the side sealing is connected to the side surface, the top sealing is connected to the side sealing, and an end of the side sealing away from the top surface has a first side, and an end of the top sealing away from the top surface has a second side.

S22: bending the side sealing towards the side surface.

S23: bending the top sealing towards the top surface, wherein an included angle between the first side and the second side is α, and 5°≤α≤60°, an included angle between the second side and the top surface is α', and 60°≤α'≤120°.

In some scenes, the cell 10 can be placed in the positioning fixture for positioning first, and then the side sealing can be bent through a first element, which pushes the side sealing to bend it towards the side surface 11b2, of the positioning fixture, and then the top sealing 11a can be bent through a second element, which pushes the top sealing 11a to bend it towards the top surface 11b3, of the positioning fixture, so as to obtain the folding angle 11d after bending. The first element may be a strip-shaped part extending along the second direction y, the second element may be a strip-shaped part extending along the third direction z, and the first element and the second element may also be used to locate the cell 10. Alternatively, then, the top sealing 11a is pushed by a positioning block along the opposite direction of the second direction y to shape the folding angle 11d after bending, so as to finally obtain the folding angle 11d.

An end of the side sealing 11c away from the top surface 11b3 has a first side 11c1, an end of the top sealing 11a away from the top surface 11b3 has a second side 11a1. The first side 11c1 and the second side 11a1 can be regarded as two sides of the folding angle 11d. The included angle between the first side 11c1 and the second side 11a1 is α, and 5°≤α≤60°. The included angle between the second side 11a1 and the top surface 11b3 is α', and 60°≤α'≤120°. By bending the top sealing 11a and controlling the folding angle 11d, the included angle α and included angle α' are within the above threshold range, which can not only reduce the risk of damage of the top sealing 11a and the side sealing 11c due to stress at the bending part, but also reduce the length of the cell 10 in the second direction y, so as to meet the size requirements of external electrical device and have a wider application range.

For example, if 5°≤α≤45°, it is easy to make a folding angle 11d in the process. If 5°≤α≤30° or 30°≤α≤5°, the stress at the folding angle 11d is small, and the risk of damage at the folding angle 11d is small. If 10°≤α≤30°, the appearance of the folding angle 11d is more beautiful. If 10°≤α≤20°, the stress at the folding angle 11d is small, and the appearance is beautiful. For another example, if 75°≤α'≤105° or 85°≤α'≤100° or 85°≤α'≤90°, the folding angle 11d is almost perpendicular to the top surface 11b3, and the length in the width direction (e.g. the third direction z) can be reduced when matched with external electrical device (e.g. battery compartment).

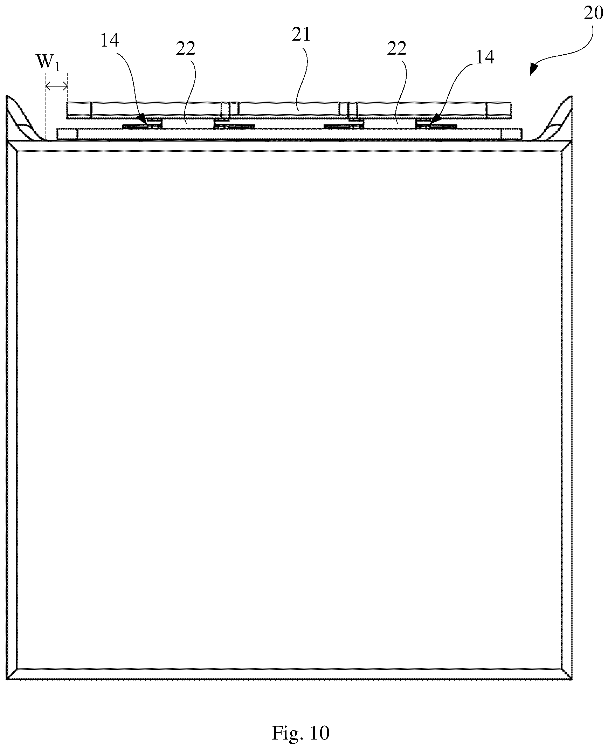

In some embodiments, an opening length of the included angle (i.e., the folding angle 11d) between the first side 11c1 and the second side 11a1 is L₀, and 1.0mm≤L₀≤8.0mm. Alternatively, 1.0mm≤L₀≤3.5mm. It should be understood that, as shown in Fig. 10, the opening length L₀ of the folding angle 11d can be understood as the distance between a point where the first side 11c1 intersects the top surface 11b3 and a point where the second side 11a1 intersects the top surface 11b3. By controlling the opening length of the folding angle 11d, while reducing the length of the cell 10 in the second direction y, the risk of damage of the top sealing 11a and the side sealing 11c due to stress at the bending part is reduced as much as possible.

In some embodiments, the height of the first side 11c1 protruding from the top surface 11b3 is H₁, and 1.0mm<H₁≤4.0mm. Alternatively, 1.0mm<H₁≤3.7mm, or 1.5mm<H₁≤2.5mm. While reducing the risk of damage at the bending part of the top sealing 11a and the side sealing 11c, the length of the cell 10 in the second direction y is reduced as much as possible.

In the scene where the shell 11 adopts an aluminum-plastic film, the thickness of the aluminum-plastic film of the top sealing 11a and the side sealing 11c can preferably be 86µm to 115µm, which is conducive to the bending of top sealing 11a and side sealing 11c to form the folding angle 11d and avoid damage in the process of forming folding angle 11d. It goes without saying that it can also be 67µm to 86µm or 86µm to 115µm.

The cell 10 may also comprise a thermistor (not shown). The thermistor is connected with the circuit board 21 through a wire, which can be arranged on the first end face 10a. The thermistor prevents the cell 10 from working when the temperature is too high. The thermistor can be set in the folding angle 11d so as to make full use of space of the folding angle 11d.

In other embodiments, the folding angle 11d may be filled with a filler, which is used to fix the shape of the folding angle 11d to reduce the deformation or even damage of the folding angle 11d. In some scenes, the filler can be glue, etc. the glue can be filled and cured within folding angle 11d. It goes without saying that the filler can also wrap the thermistor (or also wrap the wire connected thereto) to protect the thermistor.

Continuing to refer to Figs. 1 to 10, the shell 11 may comprise two side sealings 11c which are arranged opposite to each other along the third direction z. Accordingly, the shell 11 forms two folding angles 11d, the circuit board 21 may be arranged between the two folding angles 11d (or the side sealing 11c) and on the top surface 11b3, and both ends of the circuit board 21 are arranged opposite to the corresponding side sealings 11c. Both ends of the circuit board 21 are not in contact with the two folding angles 11d respectively, which can reduce the extrusion of both ends of the circuit board 21 to the side sealing 11c and reduce the risk of damage to the side sealing 11c due to collision. Alternatively, as shown in Fig. 10, the distance between either end of the circuit board 21 and the corresponding side sealing 11c (i.e. the length along the third direction z) is W₁, and 2.0mm<W₁≤8.0mm. By controlling W₁, it can not only reduce the extrusion of the circuit board 21 to the side sealing 11c, but also is conducive to reducing the length of the battery 20 along the third direction Z (i.e. the width of the battery 20).

### Third Embodiment

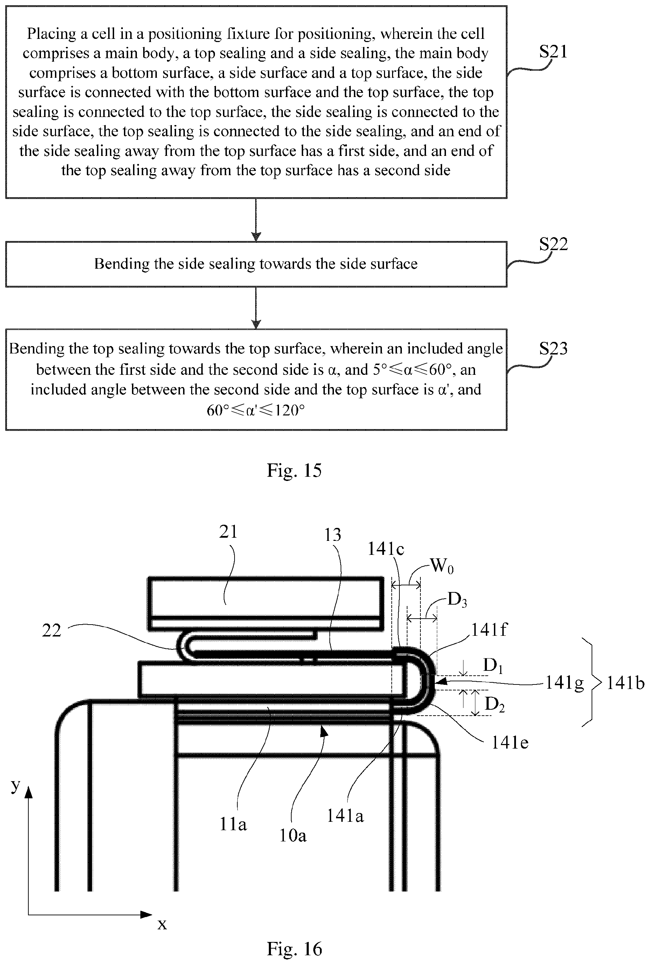

Each embodiment of the present application uses the same reference numerals to identify structural elements with the same name. Based on the description of the above embodiment, it is different therefrom that as shown in Figs. 1 and 16, the exposed portion 141 is provided with a thinning area 141g, which forms a bending line O on the sealant 14. Compared with the avoidance area 141d, the thinning area 141g does not disconnect the sealant 14, but only thins the thickness of the sealant 14 in the thinning area 141g, and the thickness of the thinning area 141g is less than that of other positions.

The position, shape, size, etc. of the thinning area 141g can be the same as those of the avoidance area 141d. Herein, the structural form of the exposed portion 141 after bending along the bending line O formed by the thinning area 141g and the resulting beneficial effects can be referred to above and will not be repeated herein.

In the process of forming the thinning area 141g by the laser cutting process, the sealant 14 is cut by a laser having a second energy to form the thinning area 141g on the sealant 14. The second energy is less than the first energy, and the first energy is the laser energy of cutting to form the avoidance area 141d.

It should be noted that all the following embodiments of the present application take examples of forming the bending line O by the avoidance area 141d, but it is only for the purpose of the convenience of exemplary description. The avoidance area 141d of the following embodiments can also be arranged as the thinning area 141g, or both the avoidance area 141d and the thinning area 141g can be arranged at the same time.

### Fourth Embodiment

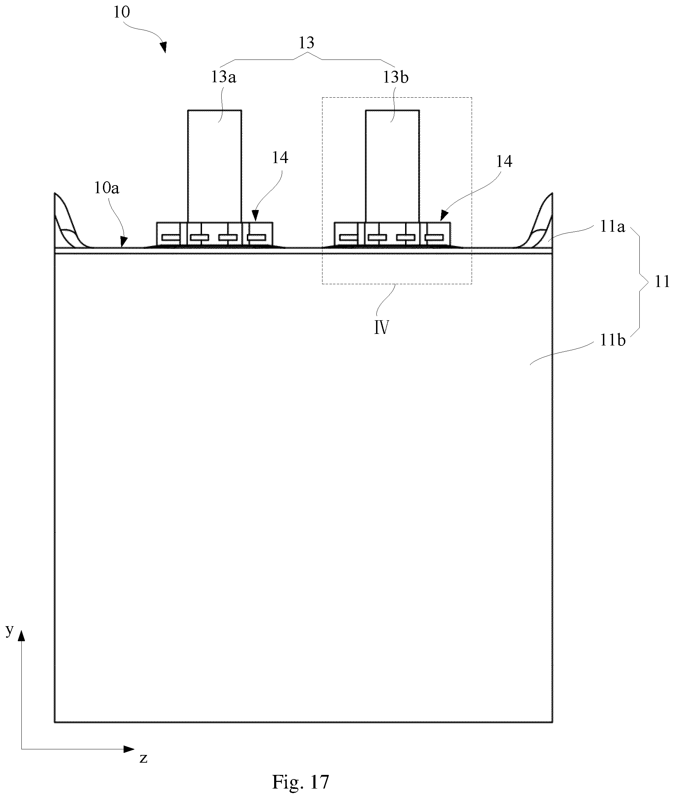

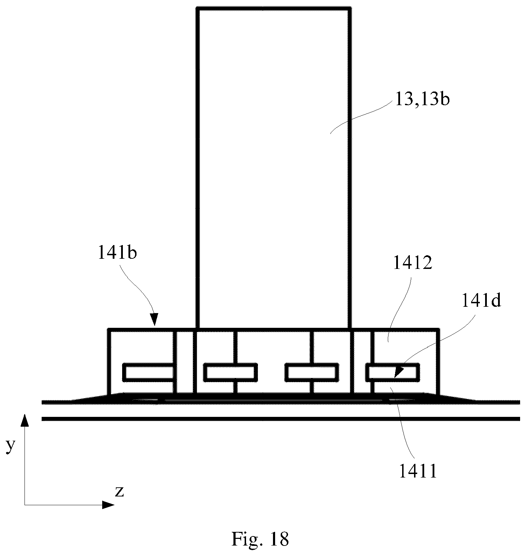

Based on the description of the above embodiment, but it is different therefrom as shown in Figs. 17 and 18, which are schematic diagrams of a structure of the sealant 14 in the non-bending state. In the cell 10 of this embodiment, when the cell 10 is in the non-bending state, avoidance areas 141d are distributed at intervals, on the exposed portion 141, perpendicular to the extension direction of the tab 13. When the cell 10 is in the bending state, the avoidance areas 141d are distributed at intervals along the third direction z on the bending area 141b. The first bending area 141e and the second bending area 141f are still connected but not completely disconnected, which is conducive to improving the structural strength of the bending area 141b, improving the protection effect of the tab 13, and reducing the risk of puncturing the packaging tape by burrs or the like at a fracture (i.e. the edges of the avoidance areas 141d) of the first bending area 141e and the second bending area 141f.

In the scene using the laser cutting process shown in Figs. 8 and 9, the sealant 14 is cut with an intermittent laser having the first energy to form continuously distributed avoidance areas 141d on the sealant 14. For example, a continuous laser having the first energy is first used to form an avoidance area 141d, and then the energy of the laser is interrupted (i.e. no laser is generated), and at a position of the next avoidance area 141d, a continuous laser having the second energy is used to form an avoidance area 141d until a plurality of avoidance areas 141d distributed at intervals are formed.

The shape of each avoidance area 141d can be a rectangle shown in Figs. 17 and 18, a circle, or other types of polygons such as triangle. The embodiment of the present application is not limited.

In addition, the number of avoidance areas 141d provided by the sealant 14 at each tab 13 is not limited in this embodiment, and the four avoidance areas 141d shown in Figs. 17 and 18 are only exemplary.

### Fifth Embodiment

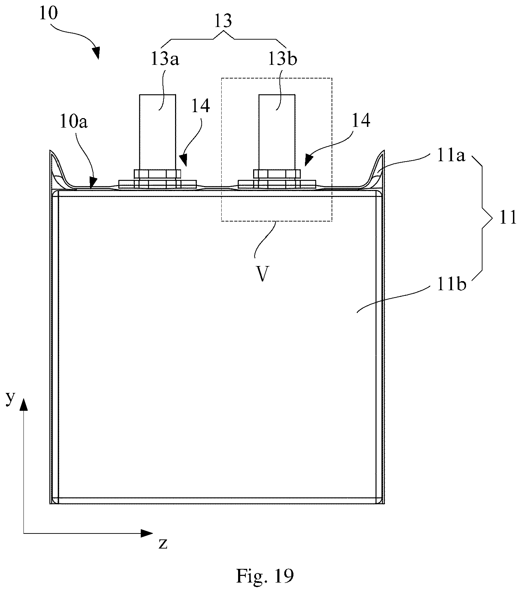

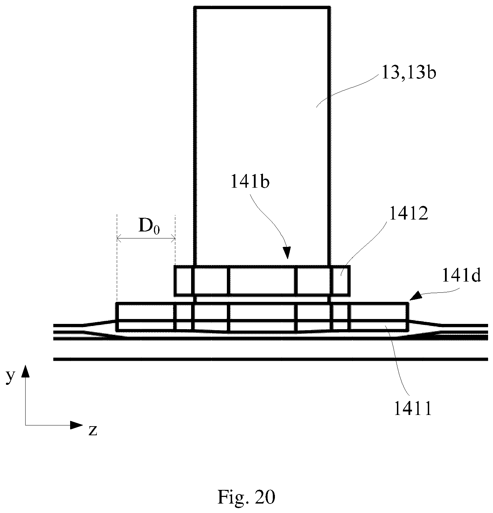

Based on the description of the above embodiment, but it is different therefrom as shown in Figs. 19 and 20, which are schematic diagrams of a structure of the sealant 14 in the non-bending state. Along the third direction z, the length of the first bending area 141e before and after bending remains unchanged, and the length of the second bending area 141f before and after bending also remains unchanged. For ease of description, this embodiment identifies a difference between the lengths of the first bending area 141e and the second bending area 141f in Figs. 19 and 20 in which show the non-bending state.

In the cell 10 of this embodiment, when the cell 10 is in the non-bending state, along the extension direction y perpendicular to the tab 13, the length of the first part 1411 is less than that of the second part 1412 on at least one side of the tab 13 (such as the left and right sides shown in Fig. 19). When the cell 10 is in the bending state, along the third direction z, the length of the second bending area 141f is less than that of the first bending area 141e on the first and second sides of the tab 13 (i.e., the left and right sides shown in Fig. 20), so as to reduce the risk of puncturing the packaging tape by burrs or the like at the fracture of the second bending area 141f.

Alternatively, along the third direction z, on the left or right side of the tab 13, the difference between the lengths of the second bending area 141f and the first bending area 141e is D₀, and 0.5mm <D₀≤3.0mm. It should be understood that on the left or right side of the tab 13, the difference between the lengths of the second bending area 141f and the first bending area 141e may or may not be equal; or, the second bending area 141f and the first bending area 141e have a difference in length on only one side, and the length on the other side is equal (i.e., flush).

In other embodiments, along the third direction z, the length of the first bending area 141e may be less than that of the second bending area 141f only on at least one side of the tab 13.

### Sixth Embodiment

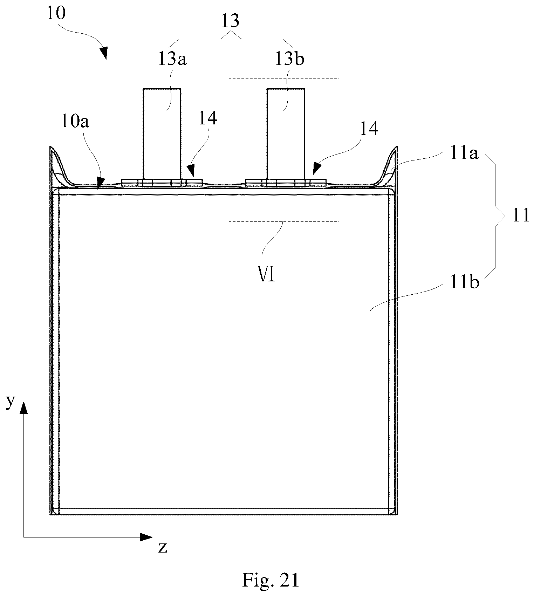

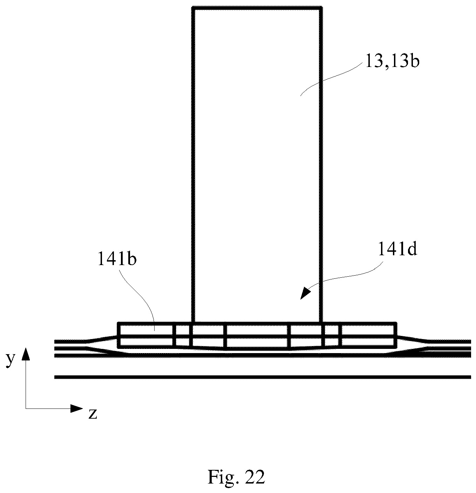

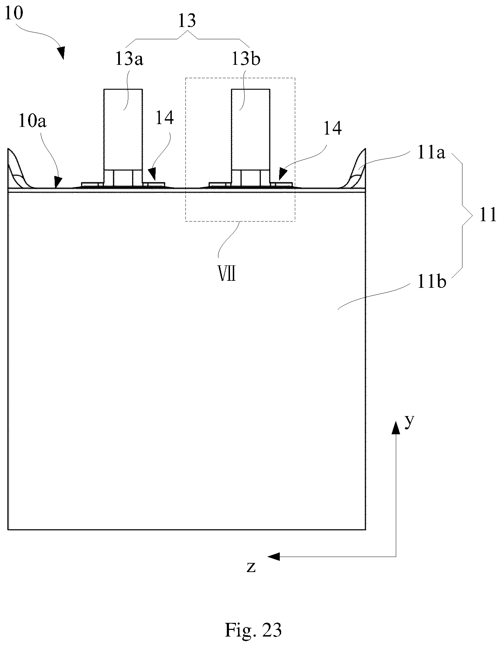

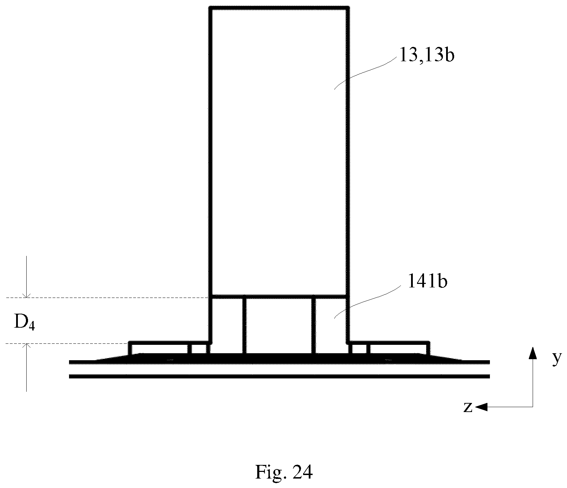

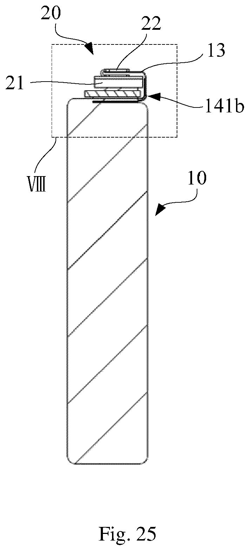

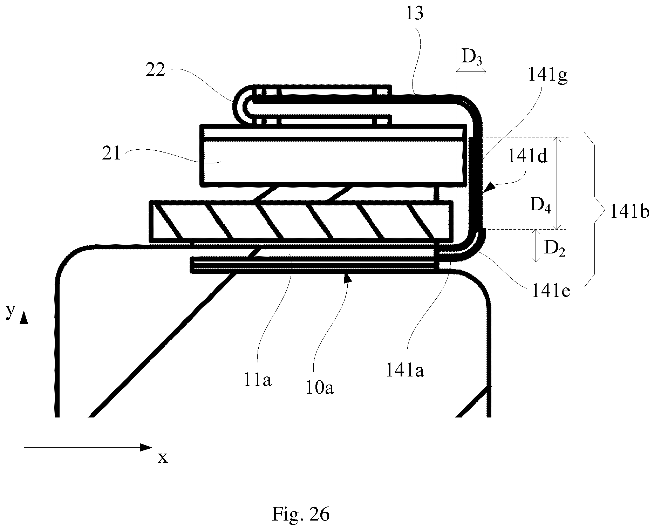

Based on the description of the above embodiment, but it is different therefrom as shown in Figs. 21 to 24, which are schematic diagrams of a structure of the sealant 14 in the non-bending state, and as shown in Figs. 25 and 26, which are schematic diagrams of a structure of the sealant 14 in the bending state.

In the scenes shown in figs. 25 and 26, a first side portion is located on the left side of the tab 13 and a second side portion is located on the right side of the tab 13.

In this embodiment, the avoidance area 141d is arranged on the second side portion of the bending area 141b, that is, the bending area 141b is provided with an avoidance area 141d on the right side of the tab 13, and the avoidance area 141d can reduce the bending difficulty of the sealant 14. However, the sealant 14 is not provided with the avoidance area 141d on the inside of the tab 13, and the sealant 14 on the inside can reduce the risk of electrical contact between the tab 13 and the circuit board 21 and the aluminum-plastic film at a cut opening of the top sealing 11a, so as to reduce the safety risk caused by short circuit of the cell 10 as a whole.

As shown in Fig. 26, along the second direction y, the length of the sealant 14 on a side of the tab 13 facing the top sealing 11a is D₄, and 0.5mm<D₄≤2.5mm. By increasing the length of the sealant 14 on a side of the tab 13 facing the top sealing 11a in the second direction y, the risk of electrical contact between the tab 13 and the circuit board 21 and the aluminum-plastic film at the cut opening of the top sealing 11a can be reduced.

Continuing to refer to Figs. 25 and 26, in a scene where the cell 10 of this embodiment is connected with the circuit board 21 to form the battery 20, the circuit board 21 can be arranged adjacent to the top sealing 11a. Accordingly, the tab 13 after being bent extends to a side (i.e. above) of the circuit board 21 facing away from the top sealing 11a. In order to meet the needs of the scene, the sealant 14 can comprise only the first sub part 141a and the bending area 141b. The bending area 141b can comprise two parts. One part connected with the first sub part 141a can be equivalent to the first bending area 141e described in the above embodiment, and the other part can extend along the second direction y without bending, which can reduce the bending part of the sealant 14 and reduce the risk of cracking of the sealant 14 due to bending.

It should be understood that the above embodiments can also adopt the setting of this embodiment, that is, the bending area 141b is provided with an avoidance area 141d corresponding to each embodiment on the outside of the tab 13, while the inside is not provided with the avoidance area 141d, which can also reduce the safety risk caused by short circuit of the cell 10.

The embodiment of the present application further provides a battery. As shown in Figs. 8 to 9, 25 and 26, the battery 20 comprises a circuit board 21 and the cell 10 according to any one of the above embodiments. The circuit board 21 is arranged on a side of the top sealing 11a facing away from the electrode assembly, and the circuit board 21 is electrically connected with the tab 13 of the cell 10. For example, the circuit board 21 is electrically connected with the tab 13 through the conductive member 22. Alternatively, as shown in Figs. 8 to 9, 25 and 26, the circuit board 21 is fixed to an upper surface of the top sealing 11a to reduce the length of the head structure of the battery 20 in the second direction y, which is conducive to reducing the head space of the battery 20.

The type of battery 20 applicable to the circuit board 21 is not limited by the embodiment of the present application, and the shape, size and function of the circuit board 21 can be determined according to the application scenes. For example, in some scenes, the circuit board 21 may be a rigid circuit board, such as a printed circuit board (PCB), or a flexible printed circuit (FPC), and the circuit board 21 may be integrated with a BMS (Battery management system) for controlling the charge and discharge of the cell 10 and ensuring safety.

In a specific scene, the battery 20, which can be soft pack cells, comprises but is not limited to all kinds of primary cells, secondary cells, fuel cells, solar cells and capacitor (e.g., super capacitor) cells. The battery 20 may preferably be a lithium secondary battery. The battery 20 of the embodiment of the present application may exist in the form of a single battery, a battery unit or a battery module.

The embodiment of the present application further provides an electronic device, comprising a load and a battery 20 or cell 10 of any of the above embodiments, and the battery 20 or cell 10 supplies power to the load.

Electronic device can be implemented in various specific forms, such as unmanned aerial vehicle, electric vehicle, electric cleaning tool, energy storage product, electric car, electric bicycle, electric navigation tool and other electronic product. In practical scenes, electronic device specifically comprises but is not limited to: standby power supply, motor, automobile, motorcycle, power-assisted bicycle, bicycle electric tools, large household battery and lithium-ion capacitor.

It will be understood by those skilled in the art that the configuration according to the embodiment of the present application can also be applied to a fixed type of electronic device except elements especially for mobile purposes.

Since the battery 20 and the electronic device have the cell 10 of any of the above-mentioned embodiments, the battery 20 and the electronic device can produce the beneficial effects of the cell 10 of the corresponding embodiment.

It should be understood that the above is only a part of the embodiments of the present application and does not limit the patent scope of the present application. For those skilled in the art, all equivalent structural transformations made by using the contents of the description and the accompanying drawings are similarly comprised in the patent claimed scope of the present application.

Although the terms "first, second" and the like are used herein to describe all kinds of information, such information should not be limited to these terms. These terms are only used to distinguish the same type of information from each other. As used herein, the singular forms "a", "one" and "the" are intended to also comprise the plural form. The terms "or" and "and/or "are interpreted as inclusive or mean any one or any combination. Exceptions to this definition occur only when combinations of components, functions, steps, or operations are inherently exclusive mutually in some means.

In addition, in the description of the embodiment of the present application, the orientation or positional relationship indicated by the terms "center", "longitudinal", "transverse", "length", "width", "thickness", "upper", "lower", "front", "rear", "left", "right", "perpendicular", "horizontal", "top", "bottom", "inner", "outer", "clockwise", "counterclockwise", etc., is based on the orientation or positional relationship shown in the accompanying drawings, which is only for the convenience of describing the technical solution and simplified description of the corresponding embodiments of the present application, rather than indicating or implying that the devices or elements must have a specific orientation, and are constructed and operated in a specific orientation, so that it cannot be understood as a limitation of the present application.

## Claims

1. A cell, comprising:
a shell, comprising a main body and a top sealing, wherein the main body comprises a bottom surface, a side surface and a top surface, the side surface is connected with the bottom surface and the top surface, and the top sealing is connected to the top surface and is bent towards the top surface;
an electrode assembly, housed in the main body;
a tab, of which one end is electrically connected to the electrode assembly, and the other end extends out of the top sealing; and
a sealant, located between the tab and the top sealing;
wherein
the sealant comprises an exposed portion extending out of the top sealing, the exposed portion is provided with an avoidance area and/or a thinning area, and the avoidance area and/or the thinning area is provided for bending of the tab.

2. The cell according to claim 1, wherein the exposed portion comprises a first part and a second part which are arranged oppositely along an extension direction of the tab, and the avoidance area and/or the thinning area is arranged between the first part and the second part.

3. The cell according to claim 2, wherein the avoidance area and/or thinning area is continuously distributed, on the exposed portion, perpendicular to the extension direction of the tab.

4. The cell according to claim 2, wherein avoidance areas and/or thinning areas are distributed at intervals, on the exposed portion, perpendicular to the extension direction of the tab.

5. The cell according to claim 1, wherein the exposed portion comprises a first part and a second part which are arranged oppositely along an extension direction of the tab; along a direction perpendicular to the extension direction of the tab, an length of the first part is less than that of the second part on at least one side of the tab.

6. The cell according to claim 5, wherein along the direction perpendicular to the extension direction of the tab, on at least one side of the tab, a difference between the lengths of the second part and the first part is D₀, and 0.5mm<D₀≤3.0mm.

7. The cell according to claim 1, wherein a distance between the avoidance area and/or the thinning area and the top sealing is W₀, and 0.2mm<W₀≤1.0mm.

8. The cell according to claim 7, wherein W₀=0.5mm.

9. The cell according to claim 1, wherein along an extension direction of the tab, a height of the exposed portion is H₀, and 0.2mm<H₀≤3.0mm.

10. The cell according to claim 9, wherein along the extension direction of the tab, the length of the top sealing is H₂, and 1.0mm<H₂≤4.0mm.

11. The cell according to any one of claims 1-10, wherein the avoidance area and/or the thinning area is arranged on a side of the exposed portion of the tab.

12. A manufacturing method of a cell, used to manufacture the cell according to any one of claims 1-11, wherein the method comprises:
placing the cell packing with a sealant on a positioning device for positioning, wherein the sealant is located between the tab and the top sealing of the cell; and
using a laser to cut the sealant along a width direction of the tab to form the avoidance area and/or the thinning area on the sealant, wherein the avoidance area and/or the thinning area is provided for bending of the tab.

13. The method according to claim 12, wherein the sealant is cut with a continuous laser having a first energy to form the avoidance area continuously distributed on the sealant.

14. The method according to claim 12, wherein the sealant is cut with an intermittent laser having a first energy to form avoidance areas being distributed at intervals on the sealant.

15. The method according to claim 13 or 14, wherein the sealant is cut with a laser having a second energy to form the thinning area on the sealant, and the second energy is less than the first energy.

16. The method according to claim 12, wherein the laser is a carbon dioxide laser, a pulse width of the laser is 10ns to 500ns, a frequency of the laser is 500 KHz to 2000 KHz, and a moving rate of the laser is 20mm/s to 50mm/s.

17. A battery, comprising:
a shell, comprising a main body and a top sealing, wherein the main body comprises a bottom surface, a side surface and a top surface, the side surface is connected with the bottom surface and the top surface, and the top sealing is connected to the top surface and is bent towards the top surface;
an electrode assembly, housed in the main body; and
a tab, of which one end is electrically connected to the electrode assembly, and the other end extends out of the top sealing;
wherein the battery further comprises:
a sealant, located between the tab and the top sealing, and comprising an exposed portion extending out of the top sealing, wherein the exposed portion is provided with a bending area, and the tab is arranged to bend in the bending area; and
a circuit board, arranged on a side, facing away from the electrode assembly, of the top sealing, and electrically connected with a tab of the cell.

18. The battery according to claim 17, wherein the exposed portion comprises a first sub part and a second sub part, the first sub part is connected with the top sealing and extends along a first direction, the second sub part is connected with the circuit board and extends along an opposite direction of the first direction, and the bending area connects the first sub part and the second sub part.

19. The battery according to claim 18, wherein the bending area is provided with an avoidance areas and/or a thinning area.

20. The battery according to claim 19, wherein the bending area comprises a first bending area and a second bending area which are arranged oppositely along a second direction, the second direction is perpendicular to the first direction, and the avoidance area and/or the thinning area is arranged between the first bending area and the second bending area.

21. The battery according to claim 20, wherein avoidance areas and/or thinning areas are distributed continuously or at intervals along a third direction in the bending area, and the third direction is perpendicular to the first direction and the second direction.

22. The battery according to claim 18, wherein the bending area comprises a first bending area and a second bending area which are arranged oppositely along a second direction, the second direction is perpendicular to the first direction; along a third direction, an length of the first bending area is less than that of the second bending area on at least one side of the tab, and the third direction is perpendicular to the first direction and the second direction.

23. The battery according to claim 22, wherein along the third direction, on either side of the tab, a difference between the lengths of the second bending area and the first bending area is D₀, and 0.5mm<D₀≤3.0mm.

24. The battery according to any one of claims 20-23, wherein a radius of curvature of the first bending area is R₁, a radius of curvature of the second bending area is R₂, and 0.1mm≤R₁≤0.5mm, 0.1mm≤R₂≤0.5mm.

25. The battery according to any one of claims 17-23, wherein a bending angle of the bending area is α₀, and 60°≤α₀≤120°.

26. The battery according to any one of claims 17-23, wherein an adhesive part is arranged between the top sealing and the circuit board, the adhesive part is configured to insulate and fix the circuit board on the top sealing, and the adhesive part comprises at least one of double-sided adhesive, foam, hot-melt adhesive and silica gel.

27. A cell, comprising:
a shell, comprising a main body and a top sealing, wherein the main body comprises a bottom surface, a side surface and a top surface, the side surface is connected with the bottom surface and the top surface, and the top sealing is connected to the top surface and is bent towards the top surface;
an electrode assembly, housed in the main body;
a tab, of which one end is electrically connected to the electrode assembly, and the other end extends out of the top sealing; and
a sealant, located between the tab and the top sealing;
wherein the shell further comprises a side sealing, the side sealing is connected to the side surface and bent towards the side surface, the top sealing is connected with the side sealing, an end of the side sealing away from the top surface has a first side, an end of the top sealing away from the top surface has a second side, an included angle between the first side and the second side is α, and 5°≤α≤60°, and an included angle between the second side and the top surface is α', and 60°≤α'≤120°.

28. The cell according to claim 27, wherein an opening length of the included angle between the first side and the second side is L₀, and 1.0mm≤L₀≤8.0mm.

29. The cell according to claim 28, wherein 1.0mm≤L₀≤3.5mm.

30. The cell according to claim 27, wherein a height, protruding from the top surface, of the first side is H₁, and 1.0mm<H₁≤4.0mm.

31. The cell according to claim 30, wherein 1.0mm<H₁≤3.7mm.

32. The cell according to claim 30, wherein 1.5mm<H₁≤2.5mm.

33. The cell according to claim 27, wherein a thickness of an aluminum-plastic film of the top sealing and the side sealing is 67µm to 150µm.

34. The cell according to claim 33, wherein the thickness of the aluminum-plastic film of the top sealing and the side sealing is 86µm to 115µm.

35. The cell according to any one of claims 27-34, wherein the cell further comprises a thermistor, and the thermistor can be arranged in the included angle of the first side and the second side.

36. The cell according to any one of claims 27-34, wherein the included angle of the first side and the second side is filled with a filler, and the filler is used to fix the included angle of the first side and the second side.

37. A manufacturing method of a cell, used to manufacture the cell according to any one of claims 27-36, wherein the method comprises:
placing the cell in a positioning fixture for positioning, wherein the cell comprises a main body, a top sealing and a side sealing, the main body comprises a bottom surface, a side surface and a top surface, the side surface is connected with the bottom surface and the top surface, the top sealing is connected to the top surface, the side sealing is connected to the side surface, the top sealing is connected to the side sealing, an end of the side sealing away from the top surface has a first side, and an end of the top sealing away from the top surface has a second side;
bending the side sealing towards the side surface; and
bending the top sealing towards the top surface, and an included angle between the first side and the second side is α, and 5°≤α≤60°, an included angle between the second side and the top surface is α', and 60°≤α'≤120°.

38. A battery, comprising: a circuit board and a cell according to any one of claims 27-36, wherein the circuit board is electrically connected with the tab of the cell.

39. The battery according to claim 38, wherein the shell comprises two side sealings which are arranged oppositely, the circuit board is arranged between the two side sealings and on the top sealing, and both ends of the circuit board are arranged opposite to corresponding side sealings.

40. The battery according to claim 38, wherein a distance between either end of the circuit board and the corresponding side sealing is W₁, and 2.0mm<W₁≤8.0mm.

41. The battery according to any one of claim 39-40, wherein an adhesive part is arranged between the top sealing and the circuit board, the adhesive part is configured to insulate and fix the circuit board on the top sealing, and the adhesive part comprises at least one of double-sided adhesive, foam, hot-melt adhesive and silica gel.

42. An electronic device, comprising a load and a cell according to any one of claims 1-11 or 27-36, or comprising a load and a battery according to any one of claims 17-26 or 38-41, wherein the cell or battery is configured to supply power to the load.
